# EUROPEAN PATENT SPECIFICATION

(11) **EP 3 308 058 B1**
(45) Date of publication and mention of the grant of the patent: **16.10.2019**
(21) Application number: 16806996.1
(22) Date of filing: 09.06.2016
(51) Int. Cl.: F16H 63/30, F16H 63/32

(54) **ACTUATOR ASSEMBLY DRIVEN BY A FLUID AND A METHOD OF OPERATING THE SAME**
DURCH EIN FLUID ANGETRIEBENE AKTUATORANORDNUNG UND VERFAHREN ZUM BETREIBEN DERSELBEN
ENSEMBLE ACTIONNEUR ENTRAÎNÉ PAR UN FLUIDE ET SON PROCÉDÉ DE FONCTIONNEMENT

(30) Priority: 09.06.2015 US 201562173172 P
(43) Date of publication of application: 18.04.2018
(73) Proprietor: Kongsberg Inc., Québec G9T GK7 (CA)
(72) Inventor: RIVERIN-GAUDREAU, Simon, Trois-Riveres, Québec G8Y 5Y1 (CA); FOYN, Paal M., 3616 Kongsberg (NO); HAUGUM, Henrik, 3610 Kongsberg (NO)
(74) Representative: Uexküll & Stolberg
(86) International application number: PCT/IB2016/053416
(87) International publication number: WO 2016/199073

(56) References cited:
- US-A- 2 901 888
- US-A- 3 053 294
- US-A- 3 053 294
- US-A- 4 748 863
- US-A- 4 787 494
- US-A- 5 012 725
- US-A- 5 944 627
- US-A1- 2013 017 919
- US-A1- 2013 152 778
- US-A1- 2013 152 778

## Description

### BACKGROUND OF THE INVENTION

### 1. Field of the Invention

The subject invention relates to an actuator assembly driven by a fluid for actuating a component of a transmission and a method of operating the same.

### 2. Description of Related Art

There is a desire within the vehicular transportation industries to provide an actuator assembly utilizing pneumatics or hydraulics to actuate a shift fork of a transmission for selectively engaging gears of the transmission. One example of the actuator assembly includes a housing defining a cavity. The housing is disposed outside of the transmission. The actuator assembly has a single piston disposed within the cavity that is driven by pneumatic or hydraulic pressure. Movement of the piston actuates the shift fork of the transmission.

Although useful, the diameter of the piston is large enough to require placement of the actuator assembly outside of the transmission. Placement of the actuator outside of the transmission results in packaging issues with components adjacent the transmission. As such, there remains a need to provide an improved actuator assembly.

US 3 053 294 A discloses an actuator assembly comprising the features of the preamble of claim 1. US 5 012 725 A discloses a similar actuator assembly which comprises a first port for supplying fluid to a pressurized portion of a first chamber, and a separate second port for supplying fluid to a pressurized portion of a second chamber.

### SUMMARY OF THE INVENTION AND ADVANTAGES

The subject invention provides for an actuator assembly driven by a fluid for actuating a component of a transmission, which actuator assembly comprises the features of claim 1. Additionally, the subject invention provides for a method of operating an actuator assembly driven by the fluid for actuating the component of the transmission, which method comprises the features of claim 14.

Preferred embodiments of the invention are set out in the dependent claims.

Accordingly, the use of first and second pistons allow for reduced packaging size of the actuator assembly in that the first and second pistons work together to create an equivalent amount of force as a single piston having a larger diameter than either of the first and second pistons. Reducing the packaging size of the actuator assembly is advantageous for mounting the actuator assembly to the transmission and improves clearance between the actuator assembly and adjacent components.

### BRIEF DESCRIPTION OF THE DRAWINGS

Advantages of the subject invention will be readily appreciated as the same becomes better understood by reference to the following detailed description when considered in connection with the accompanying drawings.
Figure 1 is a perspective view of an actuator assembly.
Figure 2 is an exploded view of a first section of a housing, first and second pistons, a divider, and a shaft
Figure 3 is a cross-sectional view of the actuator assembly shown in Figure 1 taken along 3-3, including the first and second pistons and the shaft each in an initial position.
Figure 4 is a cross-sectional view of the actuator assembly shown in Figure 3, with the first and second pistons and the shaft each in a first pressurized position.
Figure 5 is a cross-sectional view of the actuator assembly shown in Figure 3 with the first and second pistons and the shaft each in a second pressurized position.
Figure 6 is a cross-sectional view of an actuator assembly including first and second pistons and a shaft defining a bore, with the first and second piston and the shaft each in an initial position, wherein the embodiment of Figs. 6-8 is not covered by the claims.
Figure 7 is a cross-sectional view of the actuator assembly shown in Figure 6 including the first and second pistons and the shaft defining the bore, with the first and second piston and the shaft each in a first pressurized position.
Figure 8 is a cross-sectional view of the actuator assembly shown in Figure 6 including the first and second pistons and the shaft defining the bore, with the first and second piston and the shaft each in a second pressurized position.

### DETAILED DESCRIPTION OF THE INVENTION

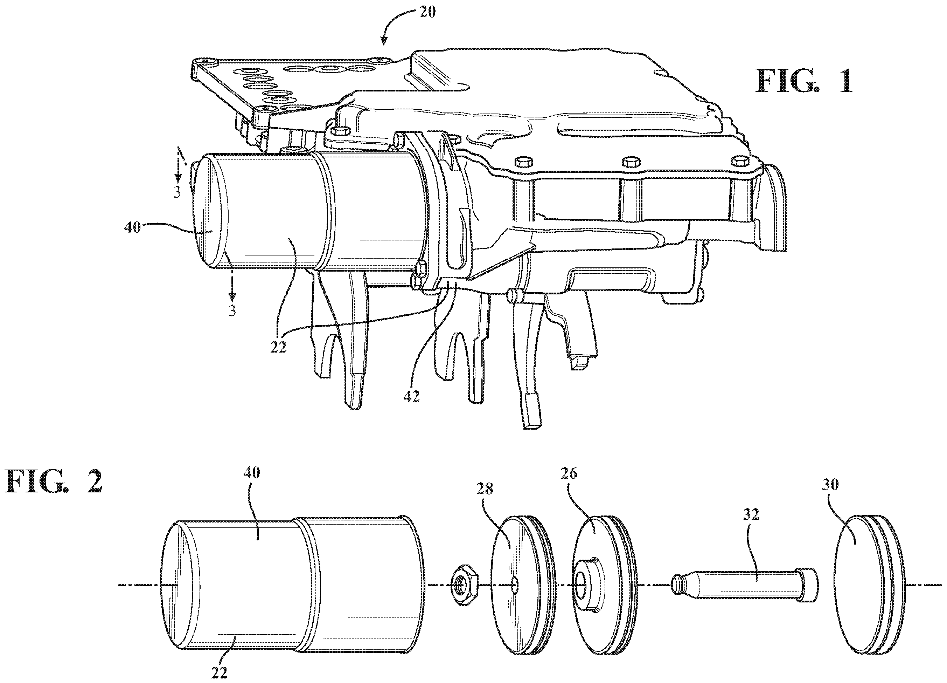

Referring to the Figures, wherein like numerals indicates like or corresponding parts throughout the several views, an actuator assembly 20 driven by a fluid F for actuating a component of a transmission is generally shown in Figure 1. The actuator assembly 20 is generally used in a vehicle, such as a passenger car or a truck; however, it is to be appreciated that the vehicle may be any configuration for providing transportation.

The actuator assembly 20 is generally integrated within the transmission and coupled to a top of a gearbox. It is to be appreciated that the actuator assembly 20 may be integrated within or coupled to an exterior of the transmission anywhere about the transmission. Furthermore, the component of the transmission that is actuated is generally a shift fork which engages and moves at least one of a plurality of gears of the transmission. It is to be appreciated that the component actuated by the actuator assembly 20 may be any suitable component which may be actuated. In addition, generally, the transmission is a manual transmission requiring input from a user to select between the forward gears of the transmission. It is to be appreciated that the transmission may be an automatic transmission, continuously variable transmission, or any other suitable transmission for a vehicle.

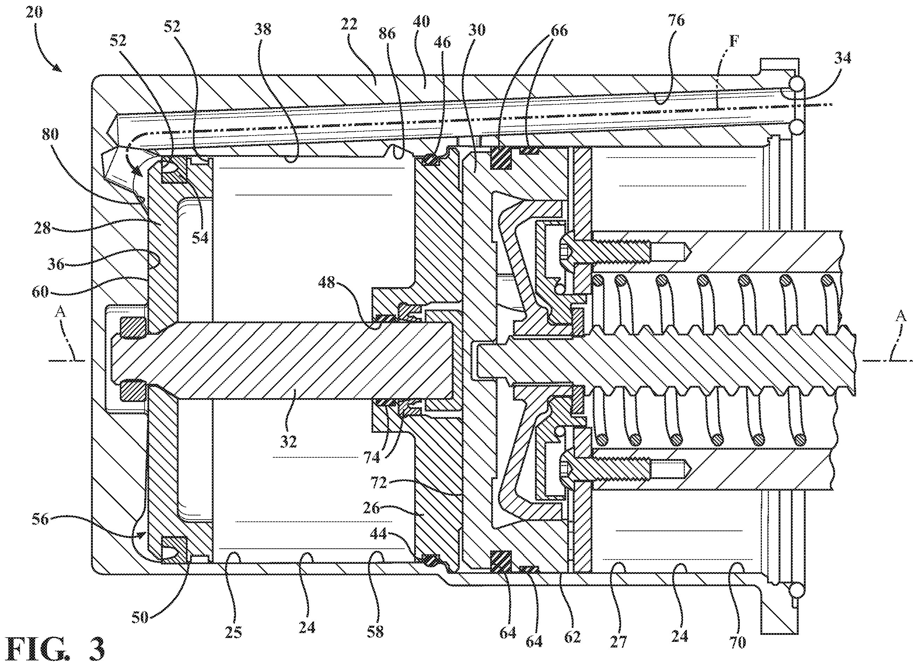

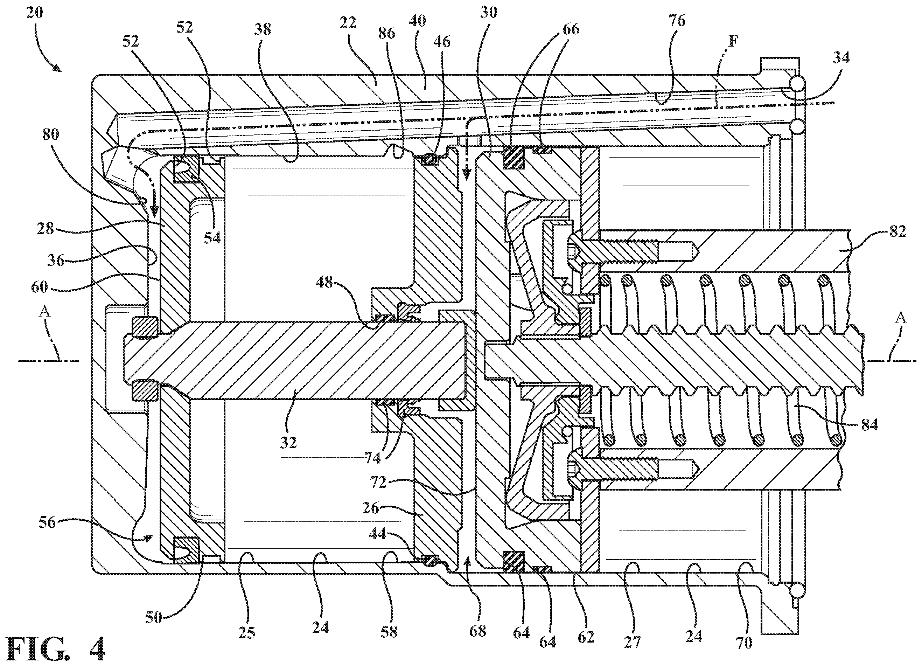

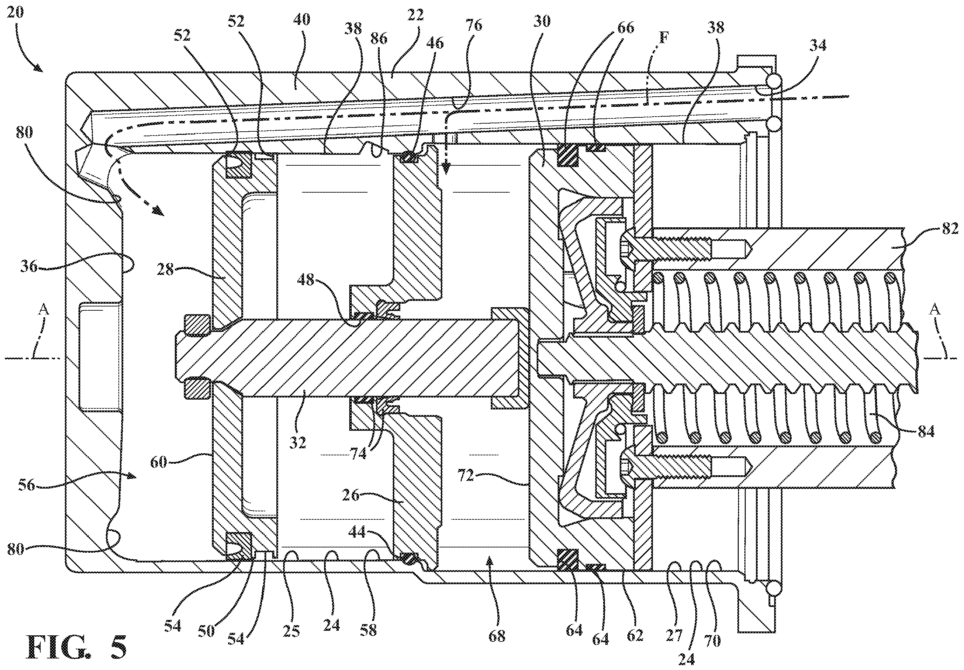

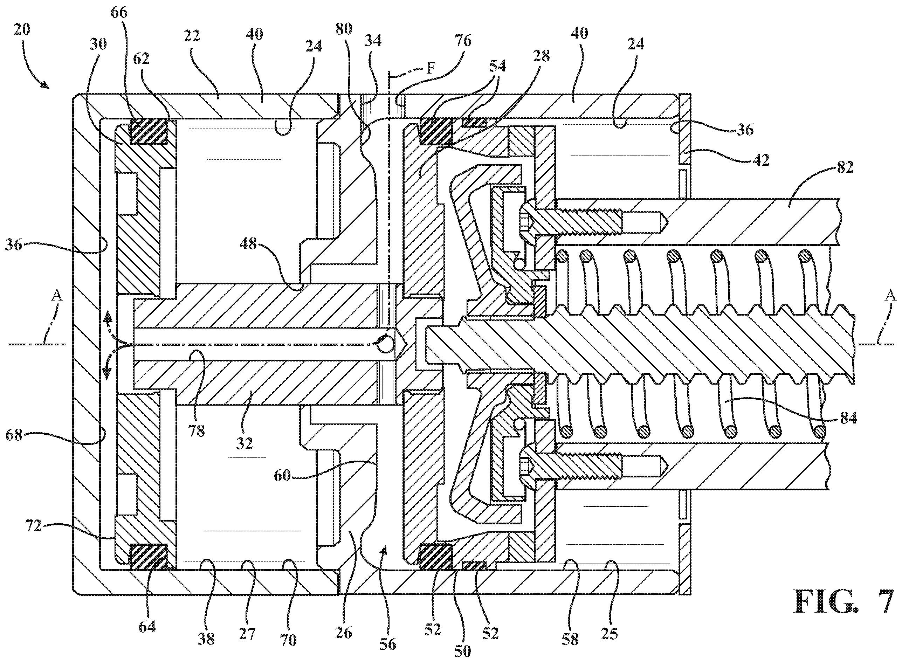

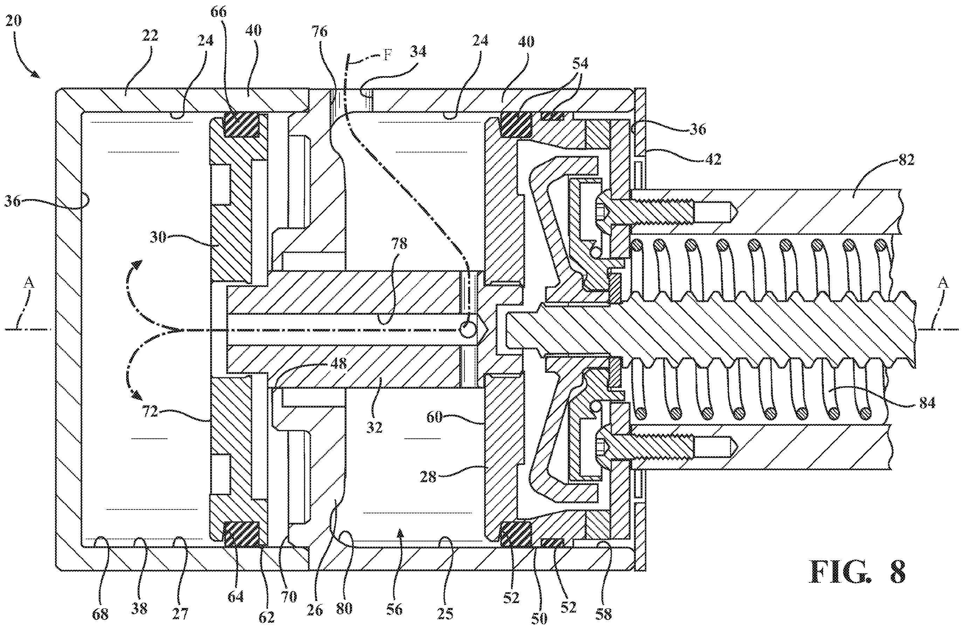

As shown in Figures 3-8, the actuator assembly 20 includes a housing 22 defining an interior 24 along a longitudinal axis A and a divider 26 disposed within the interior 24 and dividing the interior 24 into first and second chambers 25, 27. The actuator assembly 20 further includes a first piston 28 disposed within the first chamber 25 and movable along the longitudinal axis A and a second piston 30 disposed within the second chamber 27 and movable along the longitudinal axis A. The actuator assembly 20 includes a shaft 32 extending through the divider 26 and engaging the first and second pistons 28, 30, with the first and second pistons 28, 30 and the shaft 32 movable together as a unit along the longitudinal axis A from a first pressurized position (shown in Figures 4 and 7) to a second pressurized position (shown in Figures 5 and 8). The housing 22 defines at least one port 34 fluidly connected with the first and second chambers 25, 27 for providing the fluid F into and out of the first and second chambers 25, 27 such that the port 34 provides the fluid F to the first and second chambers 25, 27 between and including the first and second pressurized positions. The fluid F pressurizes against both of the first and second pistons 28, 30 and moves the first and second pistons 28, 30 and the shaft 32 as a unit from the first pressurized position to the second pressurized position.

As shown in the Figures and described herein, the first and second pistons 28, 30 are designated based on the order in which the fluid enters the first and second chambers 25, 27. Said differently, the fluid enters the first chamber 25 from the port 34 before the second chamber 27, as will be described in greater detail below. One having skill in the art will appreciate that the naming convention of the first and second pistons 28, 30 may be reversed (i.e., the fluid enters the second chamber 27 before the first chamber 25) or may utilize any suitable naming convention without escaping the scope of the present invention.

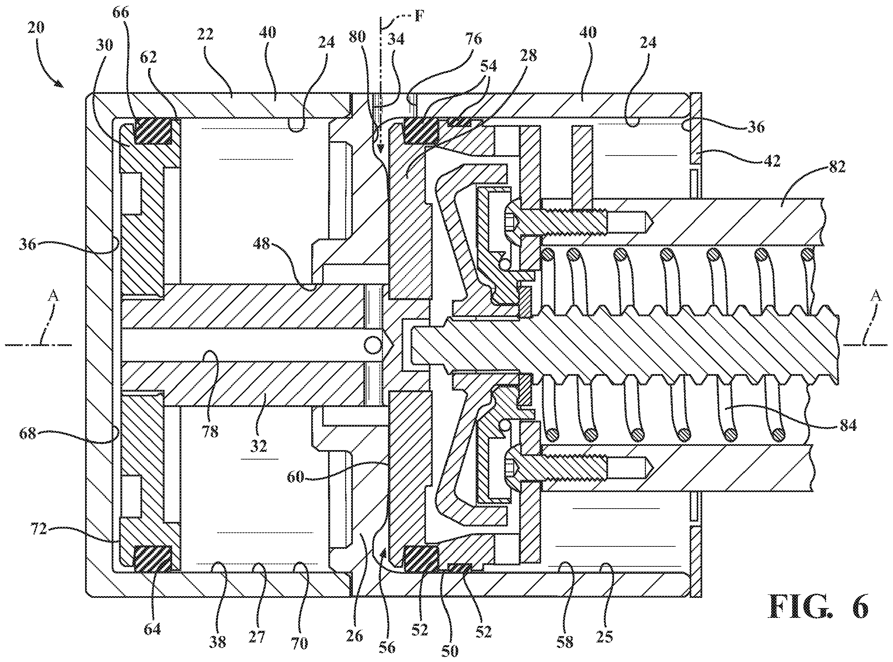

The first and second pistons 28, 30 and the shaft 32 may be movable together as a unit along the longitudinal axis A from an initial position (shown in Figures 3 and 6) to the first pressurized position (shown in Figures 4 and 7), which will be described in greater detail below.

The fluid F is typically air. However, it is to be appreciated that the fluid F may be a liquid, such as hydraulic fluid. It is to be appreciated that the fluid F may be any suitable gas or liquid for pressurizing against the first and second pistons 28, 30.

The housing 22 may have a cylindrical configuration (generally shown in Figure 2) along the longitudinal axis A with the interior 24 having a corresponding cylindrical configuration. Moreover, the housing 22 may have at least one end surface 36 a cylinder surface 38 having a substantially annular configuration about the longitudinal axis A, as shown in Figures 3-8. As shown in Figures 6-8, the at least one end surface 36 may be a pair of opposing end surfaces 36, with the cylinder surface 38 having the substantially annular configuration extending between the end surfaces 36, and with the end surfaces 36 and the cylinder surface 38 at least partially defining the interior 24. It is to be appreciated that the housing 22 and the interior 24 may have any suitable shape, configuration, and orientation and may be defined by any portion of the housing 22. Furthermore, the first and second chambers 25, 27 may have different diameters. It is to be appreciated that the first and second chambers 25, 27 may have any suitable shape, configuration, and orientation relative to one another.

As shown in Figures 1, the housing 22 may have a first section 40 and a second section 42 coupled to one another with the first and second sections 40, 42 defining the interior 24. For example, the first section 40 may be generally configured like a cup for receiving the first and second pistons 28, 30 and the shaft 32. The second section 42 may be configured like a plate covering the first section 40 to enclose the first and second pistons 28, 30 and the shaft 32 within the interior 24, as shown in Figures 6-8. Alternatively, the second section 42 may be configured like a box as shown in Figure 1. It is to be appreciated that the housing 22 may be any suitable number of sections, such as a single integral housing comprised of one section, with the section(s) having any suitable shape, configuration, and orientation for defining the interior 24.

The interior 24 is typically a single interior as shown in the Figures. It is to be appreciated that the interior 24 may be a plurality of interiors oriented in any suitable configuration relative to one another.

As shown in Figures 3-5, the divider 26 may have a cylindrical configuration. More specifically, the divider 26 may be configured to continuously abut the cylinder surface 38 of the housing 22 about the longitudinal axis A such that the divider 26 separates the first and second chambers 25, 27. It is to be appreciated that the divider 26 may engage any portion of the housing 22 within the interior 24. It is also to be appreciated that the divider 26 may be spaced from the housing 22 such that all of or a portion of the divider 26 is spaced from the housing 22.

Furthermore, in the cylindrical configuration, the divider 26 may extend along the longitudinal axis A such that the divider 26 does not extend the entire distance between the end surfaces 36 of the housing 22. As such, the divider 26 may have a plate-like configuration. One having skill in the art will appreciate that the divider 26 may have any suitable configuration.

The divider 26 may define at least one recess 44 annularly about the longitudinal axis A. The actuator assembly 20 may further include at least one divider seal 46, with the divider seal 46 individually disposed within the recess 44. The divider seal 46 engages each of the divider 26 and the housing 22 to further fluidly separate the first and second chambers 25, 27 across the divider 26.

As shown in Figures 3-8, the divider 26 may be disposed in a center of the interior 24 such that the first and second chambers 25, 27 have substantially the same size and configuration. It is to be appreciated that the divider 26 may be anywhere in the interior 24. The divider 26 may be an independent component separate from the housing 22 as shown in Figures 3-5. It is to be appreciated that the divider 26 may be integrally formed with the housing 22 as shown in Figures 6-8.

As shown in Figures 3-8, the divider 26 may define a hole 48 along the longitudinal axis A for accepting the shaft 32 therethrough. The hole 48 of the divider 26 will be better understood through further description below.

As shown in Figure 2, the first piston 28 may have a cylindrical configuration. As shown in Figures 3-8, the first piston 28 may be configured to be continuously adjacent to the cylinder surface 38 of the housing 22 about the longitudinal axis A. More specifically, the first piston 28 may have a first outer surface 50 disposed about the longitudinal axis A. The first outer surface 50 may abut the cylinder surface 38 of the housing 22. Alternatively, the first outer surface 50 may be spaced from the housing 22 such that all of or a portion of the first outer surface 50 may spaced from the housing 22. It is to be appreciated that the first outer surface 50 may engage any portion of the housing 22 within the interior 24.

Furthermore, in the cylindrical configuration, the first piston 28 may extend along the longitudinal axis A such that the first piston 28 does not extend the entire distance between the divider 26 and the end surface 36 of the housing 22 defining the first chamber 25. As such, the first piston 28 may have a plate-like configuration.

The first outer surface 50 may define at least one first channel 52 annularly about the longitudinal axis A. As shown in Figures 3-8, the actuator assembly 20 may further include at least one first seal 54, with the first seal 54 individually disposed within the first channel 52. The first seal 54 engages each of the first piston 28 and the housing 22 to fluidly separate opposing sides of the first piston 28 in the first chamber 25. The at least one first channel 52 may be a plurality of channels 52 and the at least one first seal 54 may be a plurality of seals 54.

As shown in Figures 3-8, the first piston 28 is movably disposed within the first chamber 25. The first piston 28 divides the first chamber 25 into a pressurized portion 56 of the first chamber 25 and a non-pressurized portion 58 of the first chamber 25 on opposing sides of the first piston 28. The pressurized portion 56 is selectively filled and emptied of the fluid F, as will be described in further detail below. Moreover, because the first piston 28 is movably disposed within the first chamber 25, the size of the pressurized and non-pressurized portions 56, 58 of the first chamber 25 may vary in size with the movement of the first piston 28. More specifically, as the non-pressurized portion 58 gets larger, the pressurized portion 56 gets smaller. Likewise, as the pressurized portion 56 gets larger, the non-pressurized portion 58 gets smaller.

The first piston 28 may have a first pressure surface 60 facing and partially defining the pressurized portion 56 of the first chamber 25. The first pressure surface 60 may have a substantially planar configuration, which provides for even distribution of pressure exerted by the fluid F across the first piston 28.

As shown in Figure 2, the second piston 30 may have a cylindrical configuration. As shown in Figures 3-8, the second piston 30 may be configured to be continuously adjacent to the cylinder surface 38 of the housing 22 about the longitudinal axis A. More specifically, the second piston 30 may have a second outer surface 62 disposed about the longitudinal axis A. The second outer surface 62 may abut the cylinder surface 38 of the housing 22. Alternatively, the second outer surface 62 may be spaced from the housing 22 such that all of or a portion of the second outer surface 62 may be spaced from the housing 22. It is to be appreciated that the second outer surface 62 may engage any portion of the housing 22 within the interior 24.

Furthermore, in the cylindrical configuration, the second piston 30 may extend along the longitudinal axis A such that the second piston 30 does not extend the entire distance between the divider 26 and the end surface 36 of the housing 22 defining the second chamber 27. As such, the second piston 30 may have a plate-like configuration.

The second outer surface 62 may define at least one second channel 64 annularly about the longitudinal axis A. As shown in Figures 3-8, the actuator assembly 20 may further include at least one second seal 66, with the second seal 66 individually disposed within the second channel 64. The second seal 66 engages each of the second piston 30 and the housing 22 to fluidly separate opposing sides of the second piston 30 in the second chamber 27. The at least one second channel 64 may be a plurality of second channels 64 and the at least one second seal 66 may be a plurality of second seals 66.

As shown in Figures 3-8, the second piston 30 is movably disposed within the second chamber 27. The second piston 30 divides the second chamber 27 into a pressurized portion 68 of the second chamber 27 and a non-pressurized portion 70 of the second chamber 27 on opposing sides of the second piston 30, as shown in Figures 3 and 5. The pressurized portion 68 is selectively filled and emptied of the fluid F, as will be described in further detail below. Moreover, because the second piston 30 is movably disposed within the second chamber 27, the size of the pressurized and non-pressurized portions 68, 70 of the second chamber 27 may vary in size with the movement of the second piston 30. More specifically, as the non-pressurized portion 70 gets larger, the pressurized portion 68 gets smaller. Likewise, as the pressurized portion 68 gets larger, the non-pressurized portion 70 gets smaller.

As shown in Figures 3-8, the second piston 30 may have a second pressure surface 72 facing and partially defining the pressurized portion 68 of the second chamber 27. The second pressure surface 72 may have a substantially planar configuration, which provides for even distribution of pressure exerted by the fluid F across the second piston 30.

In an embodiment not covered by the present claims, as shown in Figure 6-8, the first chamber 25 is defined by the divider 26 and the first and second sections 40, 42 of the housing 22 with the second chamber 27 defined by the divider 26 and the first section 40 of the housing 22. Said differently, the first chamber 25 is closer to the second section 42 of the housing 22 than the second chamber 27. In another embodiment, as shown in Figure 3-5, the first chamber 25 is defined by the divider 26 and the first section 40 of the housing 22 with the second chamber 27 defined by the divider 26 and the first section 40 of the housing 22. Said differently, the second chamber 27 is closer to the second section 42 of the housing 22 than the first chamber 25. It is to be appreciated that the first and second chambers 25, 27 may be oriented in any suitable configuration in the interior 24.

The pressurized portion 56 of the first chamber 25 may be defined on a side of the first piston 28 opposite the second portion of the housing 22. Likewise, the pressurized portion 68 of the second chamber 27 may be defined on a side of the second piston 30 opposite the second portion of the housing 22. It is to be appreciated that the pressurized portions 56, 68 of the first and second chambers 25, 27 may be defined on a side of the first piston 28 and the second piston 30, respectively, on the same side as the second portion of the housing 22.

The non-pressurized portions 58, 70 of the first and second chambers 25, 27 may be configured to allow a non-working fluid to move freely into and out-of the non-pressurized portion 58, 70 as the first and second pistons 28, 30 move within the first and second chambers 25, 27, respectively, which is commonly referred to in the art as venting. Venting the non-pressurized portions 58, 70 of the first and second chambers 25, 27 prevents the formation of back-pressure or a vacuum within the non-pressurized portions 58, 70 which would inhibit the free movement of the first and second pistons 28, 30. The non-pressurized portions 58, 70 of the first and second chambers 25, 27 may open to the exterior of the housing 22 to facilitate venting of the non-pressurized portions 58, 70 of the first and second chambers 25, 27 (as exemplary shown with the non-pressurized portion 70 of the second chamber 27 in Figures 3-5). Alternatively, the housing 22 may define an exhaust passageway 86 fluidly connected with the exterior of the housing 22 to transport the non-working fluid into and out-of the non-pressurized portions 58, 70 of the first and second chambers 25, 27 (as exemplary shown with the non-pressurized portion 58 of the first chamber 25 in Figures 3-5). One having skill in the art will appreciate that the non-pressurized portions 58, 70 of the first and second chambers 25, 27 may be vented in any suitable manner and utilizing any suitable configuration.

As shown in Figures 3-8, the pressurized portions 56, 68 of the first and second chambers 25, 27 may be both oriented on one side of the respective first and second pistons 28, 30 and facing the same direction such that the first and second pistons 28, 30 move in unison and in the same direction along the longitudinal axis A as the pressurized portions 56, 68 are filled with the fluid F. It is to be appreciated that the pressurized portions 56, 68 of the first and second chambers 25, 27 may be oriented on opposing sides of the respective first and second pistons 28, 30 such that the first and second pistons 28, 30 move opposite directions along the longitudinal axis A as the pressurized portions 56, 68 are filled with the fluid F.

As described above, the divider 26 may have the hole 48 with the shaft 32 extending through the hole 48. As such, the shaft 32 may be partially disposed in each of the first and second chambers 25, 27. The shaft 32 may have a cylindrical configuration. The hole 48 of the divider 26 typically has a diameter substantially equal to a diameter of the shaft 32. Said differently, the diameter of the hole 48 is equal to or slightly greater than the diameter of the shaft 32. As such, the shaft 32 may slide along the longitudinal axis A within the hole 48 with the hole 48 maintaining the orientation of the shaft 32 along the longitudinal axis A and the shaft 32 and divider 26 sealing against one another in the hole 48.

As shown in Figures 3-5, the actuator assembly 20 may further include at least one shaft seal 74. The shaft seal 74 may have an annular configuration with the shaft seal 74 engaging each of the shaft 32 and the divider 26. More specifically, the shaft seal 74 may be disposed within the hole 48 of the divider 26 or adjacent to the hole 48 of the divider 26, each of which is shown in Figures 3-5. The shaft seal 74 further seals between the shaft 32 and the divider 26 to fluidly separate the first and second chambers 25, 27.

As described above, the shaft 32 engages the first and second pistons 28, 30. As shown in Figures 3-8, the shaft 32 may be coupled to the first piston 28. More specifically, the shaft 32 may be fixed to the first piston 28. The shaft 32 may be fixed to the first piston 28, by, for example, threaded coupling, welding, press-fit engagement or any other suitable coupling manner. The shaft 32 may also be coupled to the second piston 30, as shown in Figures 6-8. More specifically, the shaft 32 may be fixed to the second piston 30. The shaft 32 may be fixed to the second piston 30, by, for example, threaded coupling, welding, press-fit engagement or any other suitable coupling manner. When the shaft 32 and the first and second pistons 28, 30 are coupled to one another, the shaft 32 and the first and second pistons 28, 30 move as a unit between the initial position and the first and second pressurized positions.

Alternatively, the shaft 32 may abut the second piston 30, as shown in Figures 3-5. More specifically, the second piston 30 may move independently of the first piston 28 and the shaft 32, with the shaft 32 capable of abutting and moving the second piston 30 from the first pressurized position to the second pressurized positions such that the first and second pistons 28, 30 and the shaft 32 move together as a unit from the first pressurized position to the second pressurized position. Furthermore, the shaft 32 may be capable of abutting and moving the second piston 30 from the initial position to the first pressurized positions such that the first and second pistons 28, 30 and the shaft 32 move together as a unit from the initial position to the first pressurized position. Said differently, the second piston 30 may be spaced from and move independently of the first piston 28 and the shaft 32 from the second pressurized position to the first pressurized position and from the first pressurized position to the initial position.

As described above, the housing 22 defines the port 34 fluidly connected with the first and second chambers 25, 27. As shown in Figures 3-8, the housing 22 may further define a passageway 76 fluidly connected with the port 34.

In one embodiment shown in Figures 3-5, the passageway 76 opens into and is fluidly connected with both of the first and second chambers 25, 27.

In an alternative not covered by the present claims and shown in Figures 6-8, the passageway 76 opens into and is fluidly connected with only the first chamber 25. The shaft 32 defines a bore 78 selectively opening into and fluidly connecting each of the first and second chambers 25, 27. Typically, the bore 78 is used to fluidly connect the second chamber 27 with the first chamber 25 when the passageway 76 opens into and is fluidly connected with the first chamber 25. It is to be appreciated that the bore 78 may be used when the passageway 76 opens into and is fluidly connected with both of the first and second chambers 25, 27. It is also to be appreciated that the bore 78 may be used in any suitable configuration where the port 34 is fluidly connected with the first and second chambers 25, 27.

As describe above, the shaft 32 and the first and second pistons 28, 30 may move as a unit from the initial position to the first pressurized position and from the first pressurized position to the second pressurized position.

As shown in Figures 3 and 6, the initial position may be defined as the first and second pistons 28, 30 disposed in the first and second chambers 25, 27 such that each of the first and second pressure surfaces 60, 72 of the first and second pistons 28, 30 independently abut one of the divider 26 and the end surface 36 of housing 22, with the first and second chambers 25, 27 substantially defined as the non-pressurized portions 58, 70. More specifically, the second piston 30 may abut one of the divider 26 and the end surface 36 of the housing 22 such that the second chamber 27 is fully defined as the non-pressurized portion 70 (i.e., the pressurized portion 68 is non-existent). Likewise, the first piston 28 may abut one of the divider 26 and the end surface 36. However, the one of the divider 26 and the housing may define an indent 80 into which the passageway 76 opens, with the pressurized portion 56 of the first chamber 25 defined within the indent 80 in the initial position. The indent 80 facilitates movement of the fluid F into the pressurized portion 56 of the first chamber 25 in the initial position to facilitate movement of the first piston 28. More specifically, the indent 80 allows the fluid F to pressurize against the first pressure surface 60 of the first position. When the passageway 76 is fluidly connected with second chamber 27, the passageway 76 may be closed (because the pressurized portion 68 of the second chamber 27 is non-existent) such that the fluid F may not pressurize against the second pressure surface 72 of the piston. Alternatively, when the bore 78 is fluidly connected with second chamber 27, the bore 78 may be closed (because the pressurized portion 68 of the second chamber 27 is non-existent) such that the fluid F may not pressurize against the second pressure surface 72 of the second piston 30. As such, the pressurized portion 56 of the first chamber 25 may be pressurized with the fluid F in the initial position to move the shaft 32 and the first and second pistons 28, 30 as a unit to the first pressurized position.

As shown in Figures 4 and 7, the first pressurized position may be defined as the first and second pistons 28, 30 disposed in the first and second chambers 25, 27 such that the passageway 76 in one embodiment or the bore 78 in another embodiment is fluidly connected with the second chamber 27. Said differently, in the first pressurized position, the first and second pistons 28, 30 are each independently spaced from the one of the divider 26 and the end surface 36 of the housing 22 such that the passageway 76 in one embodiment or the bore 78 in another embodiment is at least slightly opened allowing the pressurized portion 68 of the second chamber 27 to be fluidly connected with the port 34. As such, the pressurized portion 56, 68 of both the first and second chambers 25, 27 may be pressurized with the fluid F in the first pressurized position with the pressure exerted by the fluid F on the first piston 28 and the second piston 30 moving the shaft 32 and the first and second pistons 28, 30 as a unit to the second pressurized position. Typically, the first pressurized position is defined as any spacing of the second pressure surface 72 of the second piston 30 from the respective one of the divider 26 and the end surface 36. However, the first pressurized position may be defined as a specific spacing of the second pressure surface 72 of the second piston 30 from the respective one of the divider 26 and the end surface 36 in which the passageway 76 or the bore 78 is at least slightly opened. Accordingly, the initial position includes any positions between the abutment of the second pressure surface 72 with the respective one of the divider 26 and the end surface 36 and the specific spacing of the second pressure surface 72 of the second piston 30 from the respective one of the divider 26 and the end surface 36.

As shown in Figures 5 and 8, the second pressurized position may be defined as any position of the shaft 32 and the first and second pistons 28, 30 other than the initial position and the first pressurized position. More specifically, in the second pressurized position the first and second pistons 28, 30 are further independently spaced from one of the divider 26 and the end surface 36 of the housing 22 than the first and second pistons 28, 30 in the first pressurized position.

The actuator assembly 20 may further include an output arm 82 engaging at least one of the shaft 32 and the first and second pistons 28, 30 for actuating the component of the transmission, as shown in Figures 3-8. More specifically, the output arm 82 may engage the second piston 30 such that the output arm 82 moves with the shaft 32 and the first and second pistons 28, 30 from the initial position to the first pressurized position and from the first pressurized position to the second pressurized position. Even more specifically, the output arm 82 may be coupled to the second piston 30, such that the output arm 82 moves with the second piston 30 between the initial, first pressurized, and second pressurized positions.

As shown in Figures 3-8, the actuator assembly 20 may further include a biasing member 84 engaging at least one of the shaft 32 and the first and second pistons 28, 30 for biasing the shaft 32 and the first and second pistons 28, 30 toward the first pressurized position. Moreover, the biasing member 84 may bias the shaft 32 and the first and second pistons 28, 30 toward the initial position. When the output arm 82 is present, the biasing member 84 may engage the output arm 82, which inturn may engage at least one of the shaft 32 and the first and second pistons 28, 30 as described above. The bias of the biasing member 84 may be overcome by the pressure of the fluid F in the first chamber 25 or the first and second chambers 25, 27 such that the shaft 32 and the first and second pistons 28, 30 may move as a unit from the initial position to the first pressurized position and from the first pressurized position to the second pressurized position. When the fluid F moves out of the first and second chambers 25, 27 through the port 34, the bias of the biasing member 84 moves the shaft 32 and the first and second pistons 28, 30 to the initial position.

As such, the use of first and second pistons 28, 30 as set forth above allow for reduced packaging size of the actuator assembly 20 in that the first and second pistons 28, 30 work together to create an equivalent amount of force as a single piston having a larger diameter than either of the first and second pistons 28, 30. Specifically, the combined surface areas of the first and second pressure surfaces 60, 72 of the first and second pistons 28, 30 minus the surface area of a cross-section of the shaft 32 is equivalent the surface area of the single piston. Reducing the packaging size of the actuator assembly 20 is advantageous for mounting the actuator assembly 20 to the transmission and improves clearance between the actuator assembly 20 and adjacent components.

The operation of moving the shaft 32 and the first and second pistons 28, 30 from the initial position to the first pressurized position and from the first pressurized position to the second pressurized position in accordance with the embodiments shown in the Figures, will be described below for illustrative purposes only.

With the shaft 32 and the first and second pistons 28, 30 in the initial position shown in Figures 3 and 6, the fluid F enters through the port 34 and is moved through the passageway 76 to the pressurized portion 56 of the first chamber 25. The fluid F pressurizes against the first pressure surface 60 of the first piston 28 and moves the first piston 28 toward the first pressurized position, as shown in Figures 4 and 7. The shaft 32 and the second piston 30 correspondingly move with the first piston 28 as a unit from the initial position to the first pressurized position.

In the first pressurized position, the fluid F enters the pressurized portion 68 of the second chamber 27 through the passageway 76, as shown in Figure 4, or through the bore 78 of the shaft 32, as shown in Figure 7. The fluid F enters the pressurized portion 68 of the second chamber 27 and pressurizes against the second pressure surface 72 of the second piston 30. The fluid F continues to enter the pressurized portion 56 of the first chamber 25 and pressurizes against the first pressure surface 60 of the first piston 28. The pressure exerted by the fluid F on the first and second pressure surfaces 60, 72 of the first and second pistons 28, 30, respectively, moves the shaft 32 and the first and second pistons 28, 30 as a unit to the second pressurized position, shown in Figures 5 and 8. The movement of the shaft 32 and the first and second pistons 28, 30 from the initial position to the first pressurized position and from the first pressurized position to the second pressurized position actuates the component of the transmission.

The subject invention provides a method of operating the actuator assembly 20 driven by the fluid F for actuating the component of the transmission. As described above, the actuator assembly 20 includes the housing 22 defining the interior 24 and the longitudinal axis A, the divider 26 disposed within the interior 24 and dividing the interior 24 into the first and second chambers 25, 27, the first piston 28 disposed within the first chamber 25 and movable along the longitudinal axis A, the second piston 30 disposed within the second chamber 27 and movable along the longitudinal axis A, the shaft 32 extending through the divider 26 and engaging the first and second pistons 28, 30, and the housing 22 defining the at least one port 34 fluidly connected with the first and second chambers 25, 27.

The method includes the steps of providing the fluid F into the first and second chambers 25, 27 from the port 34, pressurizing the fluid F against both of the first and second pistons 28, 30 in the first pressurized position (as shown in Figures 4 and 7), and moving the first and second pistons 28, 30 and the shaft 32 as a unit from the first pressurized position to the second pressurized position (as shown in Figures 5 and 8).

As described above, the shaft 32 and the first and second pistons 28, 30 may be movable to the initial position. As such, the method may further include the steps of providing the fluid F into the first chamber 25 from the port 34, pressurizing the fluid F against the first piston 28 in the initial position (as shown in Figures 3 and 6), and moving the first and second pistons 28, 30 and the shaft 32 as a unit from the initial position to the first pressurized position (as shown in Figures 4 and 7). Furthermore, the steps of providing the fluid F into the first chamber 25 from the port 34, pressurizing the fluid F against the first piston 28 in the initial position and moving the first and second pistons 28, 30 and the shaft 32 as a unit from the initial position to the first pressurized position may occur prior to the step of providing the fluid F into the first and second chambers 25, 27 from the port 34.

The invention has been described in an illustrative manner, and it is to be understood that the terminology which has been used is intended to be in the nature of words of description rather than of limitation. As is now apparent to those skilled in the art, many modifications and variations of the subject invention are possible in light of the above teachings within the scope of the appended claims.

## Claims

1. An actuator assembly driven by a fluid for actuating a component of a transmission, said assembly comprising:
a housing (22) defining an interior (24) and a longitudinal axis (A);
a divider (26) disposed within said interior and dividing said interior into first and second chambers (25, 27);
a first piston (28) disposed within said first chamber (25) and movable along said longitudinal axis;
a second piston (30) disposed within said second chamber (27) and movable along said longitudinal axis;
a shaft (32) extending through said divider (26) and engaging said first and second pistons (28, 30), with said first and second pistons (28, 30) and said shaft (32) movable together as a unit along said longitudinal axis (A) from a first pressurized position to a second pressurized position;
wherein said housing (22) defines at least one port (34) fluidly connected with said first and second chambers (25, 27) for providing the fluid into and out of said first and second chambers (25, 27) such that said port (34) provides the fluid to said first and second chambers (25, 27) between and including said first and second pressurized positions with the fluid pressurizing against both of said first and second pistons (28, 30) and moving said first and second pistons (28, 30) and said shaft (32) as a unit from said first pressurized position to said second pressurized position;
wherein said housing (22) defines a passageway (76) fluidly connected with said port (34); and
wherein said first piston (28) divides said first chamber (25) into a pressurized portion (56) of said first chamber and a non-pressurized portion (58) of said first chamber on opposing sides of said first piston (28), wherein said first piston (28) has a first pressure surface (60) facing and partially defining said pressurized portion (56) of said first chamber, and said second piston (30) divides said second chamber (27) into a pressurized portion (68) of said second chamber and a non-pressurized portion (70) of said second chamber on opposing sides of said second piston (30), with only said pressurized portions (56, 68) of said first and second chambers (25, 27) fluidly connected with said passageway (76) for selectively filling and emptying said pressurized portions (56, 68) with the fluid;
**characterized in that** said passageway (76) opens into and is fluidly connected with both of said first and second chambers (25, 27).

2. The actuator assembly as set forth in claim 1, wherein said second piston (30) has a second pressure surface (72) facing and partially defining said pressurized portion (68) of said second chamber (27), and/or wherein said pressurized portions (56, 68) of said first and second chambers (25, 27) are both oriented on one side of said respective first and second pistons (28, 30) and facing the same direction such that said first and second pistons (28, 30) move in unison and in the same direction along said longitudinal axis.

3. The actuator assembly as set forth in any one of the preceding claims, wherein said housing (22) has a pair of opposing end surfaces (36) and a cylinder surface (38) having a substantially annular configuration extending between said end surfaces (36), with said end surfaces (36) and said cylinder surface (38) at least partially defining said interior.

4. The actuator assembly as set forth in claim 3, wherein said divider (26) has a cylindrical configuration with said divider (26) configured to continuously abut said cylinder surface (38) of said housing about said longitudinal axis (A) such that said divider (26) separates said first and second chambers (25, 27).

5. The actuator assembly as set forth in claim 3, wherein said first piston (28) has a cylindrical configuration and is configured to be continuously adjacent to said cylinder surface (38) of said housing (22) about said longitudinal axis, and wherein said first piston (28) has a first outer surface (50) disposed about said longitudinal axis with said first outer surface (50) defining at least one first channel (52) annularly about said longitudinal axis, and further including at least one first seal (54) individually disposed within said first channel (52) with said first seal (54) engaging each of said first piston (28) and said housing (22) to fluidly separate opposing sides of said first piston (28) in said first chamber (25).

6. The actuator assembly as set forth in claim 3, wherein said second piston (30) has a cylindrical configuration and is configured to be continuously adjacent to said cylinder surface (38) of said housing (22) about said longitudinal axis.

7. The actuator assembly as set forth in claim 6, wherein said second piston (30) has a second outer surface (62) disposed about said longitudinal axis with said second outer surface (62) defining at least one second channel (64) annularly about said longitudinal axis, and further including at least one second seal (66) individually disposed within said second channel (64) with said second seal (66) engaging each of said second piston (30) and said housing (22) to fluidly separate opposing sides of said second piston (30) in said second chamber (27).

8. The actuator assembly as set forth in any one of the preceding claims, wherein said shaft (32) is fixed to said first piston (28).

9. The actuator assembly as set forth in claim 8, wherein said shaft (22) is fixed to said second piston (30), with said shaft (32) and said first and second pistons (28, 30) movable as a unit between said first and second pressurized positions, or wherein said shaft (32) abuts said second piston (30) such that said second piston (30) is movable independent of said first piston (28) and said shaft (32), with said shaft (32) capable of abutting moving said second piston (30) from said first pressurized position to said second pressurized position such that said first and second pistons (28, 30) and said shaft (32) move together as a unit from said first pressurized position to said second pressurized position.

10. The actuator assembly as set forth in any one of preceding claims, wherein said first and second pistons (28, 30) and said shaft (32) are movable together as a unit along said longitudinal axis (A) from an initial position to said first pressurized position.

11. The actuator assembly as set forth in claim 10, wherein one of said divider (26) and said housing (22) define an indent (80) into which said passageway (76) opens, with said pressurized portion (56) of said first chamber (25) defined within said indent (80) in said initial position for facilitating movement of the fluid into said pressurized portion (56) of said first chamber (25) in said initial position to facilitate movement of said first piston (28).

12. The actuator assembly as set forth in any one of the preceding claims, wherein said divider (26) defines at least one recess (44) annularly about said longitudinal axis and further including at least one divider seal (46), with said divider seal (46) individually disposed within said recess (44) and engaging each of said divider (26) and said housing (22) to further fluidly separate said first and second chambers (25, 27) across said divider (26), and/or wherein said divider (26) defines a hole (48) along said longitudinal axis for accepting said shaft (32) therethrough, with said shaft (32) partially disposed in each of said first and second chambers (25, 27).

13. The actuator assembly as set forth in any one of the preceding claims, further including at least one shaft seal (74) having an annular configuration with said shaft seal (74) engaging each of said shaft (32) and said divider (26), and/or further including an output arm (82) engaging at least one of said shaft (32) and said first and second pistons (28, 30) for actuating the component of the transmission, and/or further including a biasing member (84) engaging at least one of said shaft (32) and said first and second pistons (28, 30) to bias said shaft (32) and said first and second pistons (28, 30) toward said first pressurized position.

14. A method of operating an actuator assembly driven by a fluid for actuating a component of a transmission, with the actuator assembly including a housing (22) defining an interior (24) and a longitudinal axis (A), a divider (26) disposed within the interior (24) and dividing the interior into first and second chambers (25, 27), a first piston (28) disposed within the first chamber (25) and movable along the longitudinal axis, a second piston (30) disposed within the second chamber (27) and movable along the longitudinal axis, a shaft (32) extending through the divider (26) and engaging the first and second pistons (28, 30), said first and second pistons (28, 30) and said shaft (32) being movable together as a unit along said longitudinal axis from a first pressurized position to a second pressurized position, with the housing (22) defining at least one port (34) fluidly connected with the first and second chambers (25, 27), with the housing (22) defining a passageway (76) fluidly connected with the port (34) and opening into and fluidly connected with both of the first and second chambers (25, 27), with the first piston (28) dividing the first chamber (25) into a pressurized portion (56) of the first chamber and a non-pressurized portion (58) of the first chamber (25) on opposing sides of the first piston (28), wherein said first piston (28) has a first pressure surface (60) facing and partially defining said pressurized portion (56) of said first chamber (25), and with the second piston (30) dividing the second chamber (27) into a pressurized portion (68) of the second chamber (27) and a non-pressurized portion (70) of the second chamber (30) on opposing sides of the second piston (28); said method comprising the steps of:
providing the fluid into the passageway (76) from the port (34);
providing the fluid into the pressurized portions (56, 68) of the first and second chambers (25, 27) from the passageway (76);
pressurizing the fluid against both of the first and second pistons (28, 30) in the first pressurized position only in the pressurized portions (56, 68) of the first and second chambers (25, 27); and
moving the first and second pistons (28, 30) and the shaft (32) as a unit from the first pressurized position to the second pressurized position.

15. The method as set forth in claim 14, wherein the shaft (32)) and the first and second pistons (28, 30) are movable to an initial position in which the first pressure surface (60) of the first piston (28) abuts an end surface (36) of the housing (22) and a second pressure surface (72) of the second piston (30) abuts the divider (26), and further including the steps of:
providing the fluid into the first chamber from the port (34);
pressurizing the fluid against the first piston (28) in the initial position; and
moving the first and second pistons (28, 30) and the shaft (32) as a unit from the initial position to the first pressurized position.

16. The method as set forth in claim 15, wherein the steps of providing the fluid into the first chamber (25) from the port (34), pressurizing the fluid against the first piston (28) in the initial position and moving the first and second pistons (28, 30) and the shaft (32) as a unit from the initial position to the first pressurized position occur prior to the step of providing the fluid into the first and second chambers (25, 27) from the passageway (76).

## Patentansprüche

1. Aktuatoraufbau, der durch ein Fluid angetrieben wird, um eine Komponente eines Getriebes zu betätigen, wobei der Aufbau aufweist:
ein Gehäuse (22), das einen Innenraum (24) und eine Längsachse (A) definiert,
einen Teiler (26), der in dem Innenraum angeordnet ist und den Innenraum in erste und zweite Kammern (25, 27) unterteilt,
einen ersten Kolben (28), der in der ersten Kammer (25) angeordnet und entlang der Längsachse beweglich ist,
einen zweiten Kolben (30), der in der zweiten Kammer (27) angeordnet und entlang der Längsachse beweglich ist,
eine Stange (32), die durch den Teiler (26) verläuft und mit den ersten und zweiten Kolben (28, 30) eingreift, wobei die ersten und zweiten Kolben (28, 30) und die Stange (32) zusammen als Einheit entlang der Längsachse (A) aus einer ersten unter Druck stehenden Position in eine zweite unter Druck stehende Position beweglich ist,
wobei das Gehäuse (22) wenigstens einen Anschluss (34) definiert, der in Fluidverbindung mit den ersten und zweiten Kammern (25, 27) steht, um das Fluid in die ersten und zweiten Kammern (25, 27) hinein und daraus heraus fließen zu lassen, so dass der Anschluss (34) das Fluid den ersten und zweiten Kammern (25, 27) zwischen und einschließlich der ersten und zweiten unter Druck stehenden Positionen zuführt, wobei das Fluid Druck auf beide der ersten und zweiten Kolben (28, 30) ausübt und die ersten und zweiten Kolben (28, 30) und die Stange (32) als eine Einheit aus der ersten unter Druck stehenden Position in die zweite unter Druck stehenden Position bewegt,
wobei das Gehäuse (22) einen Durchgang (76) definiert, der in Fluidverbindung mit dem Anschluss (34) steht und
wobei der erste Kolben (28) die erste Kammer (25) in einen unter Druck gesetzten Bereich (56) der ersten Kammer und einen nicht unter Druck gesetzten Bereich (58) der ersten Kammer auf gegenüberliegenden Seiten des ersten Kolbens (28) unterteilt, wobei der erste Kolben (28) eine erste Druckoberfläche (60) hat, die dem unter Druck gesetzten Bereich (56) der ersten Kammer zugewandt ist und diesen teilweise definiert, und der zweite Kolben (30) die zweite Kammer (27) in einen unter Druck gesetzten Bereich (68) der zweiten Kammer und einen nicht unter Druck gesetzten Bereich (70) der zweiten Kammer auf gegenüberliegenden Seiten des zweiten Kolbens (30) unterteilt, wobei die unter Druck gesetzten Bereiche (56, 68) der ersten und zweiten Kammern (25, 27) in Fluidverbindung mit dem Durchgang (76) stehen, um die unter Druck gesetzten Bereiche (56, 68) selektiv mit dem Fluid zu füllen und zu entleeren,
**dadurch gekennzeichnet, dass** der Durchgang (76) sich in beide der ersten und zweiten Kammern (25, 27) öffnet und mit beiden in Fluidverbindung steht.

2. Aktuatoraufbau nach Anspruch 1, wobei der zweite Kolben (30) eine zweite Druckoberfläche (72) hat, die dem unter Druck gesetzten Bereich (68) der zweiten Kammer (27) zugewandt ist und diesen teilweise definiert, und/oder wobei die unter Druck gesetzten Bereiche (56, 68) der ersten und zweiten Kammern (25, 27) beide auf einer Seite der jeweiligen ersten und zweiten Kolben (28, 30) gelegen sind und in die gleiche Richtung weisen, so dass die ersten und zweiten Kolben (28, 30) sich gemeinsam und in dieselbe Richtung entlang der Längsachse bewegen.

3. Aktuatoraufbau nach einem der vorhergehenden Ansprüche, wobei das Gehäuse (22) ein Paar von gegenüberliegenden Endflächen (36) und eine Zylinderoberfläche (38) hat, die eine ringförmige Gestalt hat und zwischen den Endflächen (36) verläuft, wobei die Endflächen (36) und die Zylinderoberfläche (38) den Innenraum wenigstens teilweise definieren.

4. Aktuatoraufbau nach Anspruch 3, wobei der Teiler (26) Zylindergestalt hat, wobei der Teiler (26) dazu ausgestaltet ist, um um die Längsachse (A) herum kontinuierlich an der Zylinderoberfläche (38) des Gehäuses anzuliegen, so dass der Teiler (26) die ersten und zweiten Kammern (25, 27) trennt.

5. Aktuatoraufbau nach Anspruch 3, wobei der erste Kolben (28) Zylindergestalt hat und dazu ausgestaltet ist, um die Längsachse herum kontinuierlich angrenzend an der Zylinderoberfläche (38) des Gehäuses (22) zu sein, und wobei der erste Kolben (28) eine erste Außenfläche (50) hat, die um die Längsachse herum angeordnet ist, wobei die erste Außenfläche (50) wenigstens einen ersten Kanal (52), der ringförmig um die Längsachse verläuft, definiert, und weiterhin wenigstens eine erste Dichtung (54) aufweist, die individuell innerhalb des ersten Kanals (52) angeordnet ist, wobei die erste Dichtung (54) sowohl an dem ersten Kolben (28) als auch an dem Gehäuse (22) anliegt, um gegenüberliegende Seiten des ersten Kolbens (28) in der ersten Kammer (25) in Bezug auf Fluiddurchfluss zu trennen.

6. Aktuatoraufbau nach Anspruch 3, wobei der zweite Kolben (30) Zylindergestalt hat und dazu ausgestaltet ist, um um die Längsachse herum kontinuierlich angrenzend an die Zylinderoberfläche (38) des Gehäuses (22) zu sein.

7. Aktuatoraufbau nach Anspruch 6, wobei der zweite Kolben (30) eine zweite Außenfläche (62) hat, die um die Längsachse herum verläuft, wobei die zweite Außenfläche (62) wenigstens einen zweiten Kanal (64) definiert, der ringförmig um die Längsachse herum verläuft, und weiter wenigstens eine zweite Dichtung (66) hat, die individuell innerhalb des zweiten Kanals (64) angeordnet ist, wobei die zweite Dichtung (66) sowohl an dem zweiten Kolben (30) als auch an dem Gehäuse (22) anliegt, um gegenüberliegende Seiten des zweiten Kolbens (30) in der zweiten Kammer (27) in Bezug auf Fluiddurchfluss zu trennen.

8. Aktuatoraufbau nach einem der vorhergehenden Ansprüche, wobei die Stange (32) an dem zweiten Kolben (28) fixiert ist.

9. Aktuatoraufbau nach Anspruch 8, wobei die Stange (22) an dem zweiten Kolben (30) fixiert ist, wobei die Stange und die ersten und zweiten Kolben (28, 30) als eine Einheit zwischen den ersten und zweiten unter Druck stehenden Positionen beweglich sind, oder wobei die Stange (32) an dem zweiten Kolben (30) anliegt, so dass der zweite Kolben (30) unabhängig von dem ersten Kolben (28) und der Stange (32) beweglich ist, wobei die Stange (32) in der Lage ist, in Anlage an dem zweiten Kolben (30) diesen aus der ersten unter Druck stehenden Position in die zweite unter Druck stehende Position zu bewegen, so dass die ersten und zweiten Kolben (28, 30) und die Stange (32) sich zusammen als Einheit aus der ersten unter Druck stehenden Position in die zweite unter Druck stehende Position bewegen.

10. Aktuatoraufbau nach einem der vorhergehenden Ansprüche, wobei die ersten und zweiten Kolben (28, 30) und die Stange (32) zusammen als Einheit entlang der Längsachse (A) aus einer Anfangsstellung in die erste unter Druck stehende Position beweglich sind.

11. Aktuatoraufbau nach Anspruch 10, wobei eines von dem Teiler (26) und dem Gehäuse (22) eine Vertiefung (80) definieren, in die der Durchgang (76) mündet, wobei der unter Druck setzbare Bereich (56) der ersten Kammer (25) in der Anfangsstellung in der Vertiefung (80) definiert ist, um die Bewegung des Fluids in den unter Druck setzbaren Bereich (56) des ersten Kammer (25) in der Anfangsstellung zu erleichtern, um die Bewegung des ersten Kolbens (28) zu unterstützen.

12. Aktuatoraufbau nach einem der vorhergehenden Ansprüche, wobei der Teiler (26) wenigstens eine Vertiefung (44) definiert, die ringförmig um die Längsachse verläuft und die ferner wenigstens eine Teilerdichtung (46) enthält, wobei die Teilerdichtung (46) individuell innerhalb der Vertiefung (44) angeordnet ist und sowohl an dem Teiler (26) als auch an dem Gehäuse (22) anliegt, um die ersten und zweiten Kammern (25, 27) in Bezug auf Fluiddurchfluss vorbei an dem Teiler (26) zu trennen, und/oder wobei der Teiler (26) eine Öffnung (48) entlang der Längsachse definiert, um die Stange (32) darin aufzunehmen, wobei die Stange (32) teilweise in jeder der beiden der ersten und zweiten Kammern (25, 27) angeordnet ist.

13. Aktuatoraufbau nach einem der vorhergehenden Ansprüche, der weiterhin wenigstens eine Stangendichtung (74) aufweist, die eine ringförmige Gestalt hat, wobei die Stangendichtung (74) sowohl an der Stange (32) als auch an dem Teiler (26) anliegt, und/oder der weiterhin einen Ausgabearm (82) aufweist, der wenigstens an einem von der Stange (32) und den ersten und zweiten Kolben (28, 30) anliegt, um die Komponente des Getriebes zu betätigen, und/oder der ferner ein Vorspannelement (84) aufweist, das wenigstens an einem von der Stange (32) und den ersten und zweiten Kolben (28, 30) anliegt, um die Stange (32) und die ersten und zweiten Kolben (28, 30) zu der ersten unter Druck stehenden Position hin vorzuspannen.

14. Verfahren zum Betreiben eines Aktuatoraufbaus, der durch ein Fluid angetrieben wird, um eine Komponente eines Getriebes zu betätigen, wobei der Aktuatoraufbau aufweist:
ein Gehäuse (22), das einen Innenraum (24) und eine Längsachse (A) definiert, einen Teiler (26), der in dem Innenraum (24) angeordnet ist und den Innenraum in erste und zweite Kammern (25, 27) unterteilt, einen ersten Kolben (28), der sich in der ersten Kammer (25) befindet und entlang der Längsachse beweglich ist, einen zweiten Kolben (30), der sich in der zweiten Kammer (27) befindet und entlang der Längsachse beweglich ist, eine Stange (32), die durch den Teiler (26) hindurch verläuft und mit den ersten und zweiten Kolben (28, 30) eingreift, wobei die ersten und zweiten Kolben (28, 30) und die Stange (32) zusammen als Einheit entlang der Längsachse von einer ersten unter Druck stehenden Position in eine zweite unter Druck stehende Position beweglich sind, wobei das Gehäuse (22) wenigstens einen Anschluss (34) definiert, der in Fluidverbindung mit den ersten und zweiten Kammern (25, 27) steht, wobei das Gehäuse (22) einen Durchgang (76) definiert, der in Fluidverbindung mit dem Anschluss (34) steht und sich öffnet in und in Fluidverbindung steht mit beiden der ersten und zweiten Kammern (25, 27), wobei der erste Kolben (28) die erste Kammer (25) in einen unter Druck setzbaren Bereich (56) der ersten Kammer und einen nicht unter Druck setzbaren Bereich (58) der ersten Kammer (25) auf gegenüberliegenden Seiten des ersten Kolbens (28) unterteilt, wobei der erste Kolben (28) eine erste Druckfläche (60) hat, die dem unter Druck setzbaren Bereich (56) der ersten Kammer (25) zugewandt ist und diesen teilweise definiert, und wobei der zweite Kolben (30) die zweite Kammer (27) in einen unter Druck setzbaren Bereich (68) der zweiten Kammer (27) und einen nicht unter Druck setzbaren Bereich (70) der zweiten Kammer (30) auf gegenüberliegenden Seiten des zweiten Kolbens (28) unterteilt, wobei das Verfahren die Schritte beinhaltet,
Fluid von dem Anschluss (34) in den Durchgang (76) zu liefern,
das Fluid aus dem Durchgang (76) in die unter Druck setzbaren Bereiche (56, 68) der ersten und zweiten Kammern (25, 27) zu liefern,
das Fluid nur in der ersten unter Druck stehenden Position gegen beide der ersten und zweiten Kolben (28, 30) in den unter Druck setzbaren Bereichen (56, 68) der ersten und zweiten Kammern (25, 27) drücken zu lassen, und
die ersten und zweiten Kolben (28, 30) und die Stange als Einheit aus der ersten unter Druck stehenden Position in die zweite unter Druck stehende Position zu bewegen.

15. Verfahren nach Anspruch 14, wobei die Stange (32) und die ersten und zweiten Kolben (28, 30) in eine Anfangsstellung beweglich sind, in der die erste Druckfläche (60) des ersten Kolbens (28) an einer Endfläche (36) des Gehäuses (22) anliegt und eine zweite Druckfläche (72) des zweiten Kolbens (30) an dem Teiler (26) anliegt, wobei das Verfahren weiter die Schritte beinhaltet,
das Fluid aus dem Anschluss (34) in die erste Kammer zu liefern,
das Fluid in der Anfangsstellung gegen den ersten Kolben (28) drücken zu lassen, und
die ersten und zweiten Kolben (28, 30) und die Stange (32) als Einheit aus der Anfangsstellung in die erste unter Druck stehenden Position zu bewegen.

16. Verfahren nach Anspruch 15, wobei die Schritte, das Fluid von dem Anschluss (34) in die erste Kammer (25) zu liefern, das Fluid in der Anfangsstellung gegen den ersten Kolben (28) drücken zu lassen und die ersten und zweiten Kolben (28, 30) und die Stange (32) als Einheit aus der Anfangsstellung in die erste unter Druck stehende Position zu bewegen, vor dem Schritt stattfinden, das Fluid aus dem Durchgang (76) in die ersten und zweiten Kammern (25, 27) zu liefern.

## Revendications

1. Ensemble actionneur entraîné par un fluide pour actionner un composant d'une transmission, ledit ensemble comprenant :
un logement (22) définissant une partie intérieure (24) et un axe longitudinal (A) ;
un diviseur (26) disposé à l'intérieur de ladite partie intérieure et divisant ladite partie intérieure en première et seconde chambres (25, 27) ;
un premier piston (28) disposé à l'intérieur de ladite première chambre (25) et mobile le long dudit axe longitudinal ;
un second piston (30) disposé à l'intérieur de ladite seconde chambre (27) et mobile le long dudit axe longitudinal ;
un arbre (32) s'étendant à travers ledit diviseur (26) et se mettant en prise avec lesdits premier et second pistons (28, 30), lesdits premier et second pistons (28, 30) et ledit arbre (32) étant mobiles conjointement en tant qu'unité le long dudit axe longitudinal (A) d'une première position sous pression vers une seconde position sous pression ;
dans lequel ledit logement (22) définit au moins un orifice (34) relié fluidiquement auxdites première et seconde chambres (25, 27) pour fournir le fluide dans lesdites première et seconde chambres (25, 27) et hors de celles-ci de telle sorte que ledit orifice (34) fournit le fluide auxdites première et seconde chambres (25, 27) entre lesdites première et seconde positions en les incluant, le fluide exerçant une pression contre à la fois lesdits premier et second pistons (28, 30) et déplaçant lesdits premier et second pistons (28, 30) et ledit arbre (32) en tant qu'unité de ladite première position sous pression à ladite seconde position sous pression ;
dans lequel ledit logement (22) définit un passage (76) relié fluidiquement audit orifice (34) ; et
dans lequel ledit premier piston (28) divise ladite première chambre (25) en une partie sous pression (56) de ladite première chambre et une partie qui n'est pas sous pression (58) de ladite première chambre sur les côtés opposés dudit premier piston (28), dans lequel ledit premier piston (28) a une première surface de pression (60) faisant face à et définissant partiellement ladite partie sous pression (56) de ladite première chambre, et ledit second piston (30) divise ladite seconde chambre (27) en une partie sous pression (68) de ladite seconde chambre et en une partie qui n'est pas sous pression (70) de ladite seconde chambre sur les côtés opposés dudit second piston (30), seules lesdites parties sous pression (56, 68) desdites première et seconde chambres (25, 27) étant fluidiquement reliées audit passage (76) pour remplir et vider sélectivement lesdites parties sous pression (56, 68) avec le fluide ;
**caractérisé en ce que** ledit passage (76) débouche à la fois dans lesdites première et seconde chambres (25, 27) et est fluidiquement relié à celles-ci.

2. Ensemble actionneur selon la revendication 1, dans lequel ledit second piston (30) possède une seconde surface de pression (72) faisant face à et définissant partiellement ladite partie sous pression (68) de ladite seconde chambre (27), et/ou dans lequel lesdites parties sous pression (56, 68) desdites première et seconde chambres (25, 27) sont à la fois orientées sur un côté desdits premier et second pistons (28, 30) respectifs et font face à la même direction de sorte que lesdits premier et second pistons (28, 30) se déplacent à l'unisson et dans la même direction le long dudit axe longitudinal.

3. Ensemble actionneur selon l'une quelconque des revendications précédentes, dans lequel ledit logement (22) possède une paire de surfaces d'extrémité opposées (36) et une surface de cylindre (38) ayant une configuration sensiblement annulaire s'étendant entre lesdites surfaces d'extrémité (36), lesdites surfaces d'extrémité (36) et ladite surface de cylindre (38) définissant au moins partiellement ladite partie intérieure.

4. Ensemble actionneur selon la revendication 3, dans lequel ledit diviseur (26) a une configuration cylindrique, ledit diviseur (26) étant configuré pour venir en butée en continu avec ladite surface de cylindre (38) dudit logement autour dudit axe longitudinal (A) de telle sorte que ledit diviseur (26) sépare lesdites première et seconde chambres (25, 27).

5. Ensemble actionneur selon la revendication 3, dans lequel ledit premier piston (28) a une configuration cylindrique et est configuré de manière à être adjacent en continu à ladite surface de cylindre (38) dudit logement (22) autour dudit axe longitudinal, et dans lequel ledit premier piston (28) a une première surface externe (50) disposée autour dudit axe longitudinal, ladite première surface externe (50) définissant au moins un premier canal (52) de manière annulaire autour dudit axe longitudinal, et incluant en outre au moins un premier joint (54) disposé individuellement à l'intérieur dudit premier canal (52), ledit premier joint (54) se mettant en prise avec chacun dudit premier piston (28) et dudit logement (22) pour séparer fluidiquement les côtés opposés dudit premier piston (28) dans ladite première chambre (25).

6. Ensemble actionneur selon la revendication 3, dans lequel ledit second piston (30) a une configuration cylindrique et est configuré de manière à être adjacent en continu à ladite surface de cylindre (38) dudit logement (22) autour dudit axe longitudinal.

7. Ensemble actionneur selon la revendication 6, dans lequel ledit second piston (30) possède une seconde surface externe (62) disposée autour dudit axe longitudinal, ladite seconde surface externe (62) définissant au moins un second canal (64) annulairement autour dudit axe longitudinal, et incluant en outre au moins un second joint (66) disposé individuellement dans ledit second canal (64), ledit second joint (66) se mettant en prise avec chacun dudit second piston (30) et dudit logement (22) pour séparer fluidiquement les côtés opposés dudit second piston (30) dans ladite seconde chambre (27).

8. Ensemble actionneur selon l'une quelconque des revendications précédentes, dans lequel ledit arbre (32) est fixé audit premier piston (28).

9. Ensemble actionneur selon la revendication 8, dans lequel ledit arbre (22) est fixé audit second piston (30), ledit arbre (32) et lesdits premier et second pistons (28, 30) étant mobiles en tant qu'unité entre lesdites première et seconde positions sous pression, ou dans lequel ledit arbre (32) vient en butée contre ledit second piston (30) de telle sorte que ledit second piston (30) est mobile indépendamment dudit premier piston (28) et dudit arbre (32), ledit arbre (32) étant apte à venir en butée en déplaçant ledit second piston (30) de ladite première position sous pression vers ladite seconde position sous pression de telle sorte que lesdits premier et second pistons (28, 30) et ledit arbre (32) se déplacent conjointement en tant qu'unité de ladite première position sous pression vers ladite seconde position sous pression.

10. Ensemble actionneur selon l'une quelconque des revendications précédentes, dans lequel lesdits premier et second pistons (28, 30) et ledit arbre (32) sont mobiles conjointement en tant qu'unité le long dudit axe longitudinal (A) d'une position initiale vers ladite première position sous pression.

11. Ensemble actionneur selon la revendication 10, dans lequel l'un dudit diviseur (26) et dudit logement (22) définissent un renfoncement (80) dans lequel débouche ledit passage (76), ladite partie sous pression (56) de ladite première chambre (25) étant définie dans ledit renfoncement (80) dans ladite position initiale pour faciliter le déplacement du fluide dans ladite partie sous pression (56) de ladite première chambre (25) dans ladite position initiale pour faciliter le déplacement dudit premier piston (28).

12. Ensemble actionneur selon l'une quelconque des revendications précédentes, dans lequel ledit diviseur (26) définit au moins un creux (44) annulairement autour dudit axe longitudinal et incluant en outre au moins un joint de diviseur (46), ledit joint de diviseur (46) étant disposé individuellement dans ledit creux (44) et se mettant en prise avec chacun dudit diviseur (26) et dudit logement (22) pour séparer en outre fluidiquement lesdites première et seconde chambres (25, 27) à travers ledit diviseur (26), et/ou dans lequel ledit diviseur (26) définit un trou (48) le long dudit axe longitudinal pour accepter ledit arbre (32) à travers lui, ledit arbre (32) étant partiellement disposé dans chacune desdites première et seconde chambres (25, 27).

13. Ensemble actionneur selon l'une quelconque des revendications précédentes, incluant en outre au moins un joint d'arbre (74) ayant une configuration annulaire, ledit joint d'arbre (74) se mettant en prise avec chacun dudit arbre (32) et dudit diviseur (26), et/ou incluant en outre un bras de sortie (82) se mettant en prise avec au moins l'un dudit arbre (32) et desdits premier et second pistons (28, 30) pour actionner le composant de la transmission, et/ou incluant en outre un élément de sollicitation (84) se mettant en prise avec au moins l'un dudit arbre (32) et desdits premier et second pistons (28, 30) pour solliciter ledit arbre (32) et lesdits premier et second pistons (28, 30) vers ladite première position sous pression.

14. Procédé de fonctionnement d'un ensemble actionneur entraîné par un fluide pour actionner un composant d'une transmission, l'ensemble actionneur incluant un logement (22) définissant une partie intérieure (24) et un axe longitudinal (A), un diviseur (26) disposé dans la partie intérieure (24) et divisant la partie intérieure en première et seconde chambres (25, 27), un premier piston (28) disposé dans la première chambre (25) et mobile le long de l'axe longitudinal, un second piston (30) disposé dans la seconde chambre (27) et mobile le long de l'axe longitudinal, un arbre (32) s'étendant à travers le diviseur (26) et se mettant en prise avec les premier et second pistons (28, 30), lesdits premier et second pistons (28, 30) et ledit arbre (32) étant mobiles conjointement en tant qu'unité le long dudit axe longitudinal d'une première position sous pression à une seconde position sous pression, le logement (22) définissant au moins un orifice (34) relié fluidiquement avec les première et seconde chambres (25, 27), le logement (22) définissant un passage (76) relié fluidiquement à l'orifice (34) et débouchant à la fois dans les première et seconde chambres (25, 27) et relié fluidiquement à celles-ci, le premier piston (28) divisant la première chambre (25) en une partie sous pression (56) de la première chambre et une partie qui n'est pas sous pression (58) de la première chambre (25) sur les côtés opposés du premier piston (28), dans lequel ledit premier piston (28) a une première surface de pression (60) faisant face à et définissant partiellement ladite partie sous pression (56) de ladite première chambre (25), et le second piston (30) divisant la seconde chambre (27) en une partie sous pression (68) de la seconde chambre (27) et une partie qui n'est pas sous pression (70) de la seconde chambre (30) sur les côtés opposés du second piston (28) ; ledit procédé comprenant les étapes de :
fourniture du fluide dans le passage (76) depuis l'orifice (34) ;
fourniture du fluide dans les parties sous pression (56, 68) des première et seconde chambres (25, 27) depuis le passage (76) ;
mise sous pression du fluide contre à la fois les premier et second pistons (28, 30) dans la première position sous pression uniquement dans les parties sous pression (56, 68) des première et seconde chambres (25, 27) ; et
déplacement des premier et second pistons (28, 30) et de l'arbre (32) en tant qu'unité de la première position sous pression à la seconde position sous pression.

15. Procédé selon la revendication 14, dans lequel l'arbre (32)) et les premier et second pistons (28, 30) sont mobiles vers une position initiale dans laquelle la première surface de pression (60) du premier piston (28) vient en butée contre une surface d'extrémité (36) du logement (22) et une seconde surface de pression (72) du second piston (30) vient en butée contre le diviseur (26), et incluant en outre les étapes de :
fourniture du fluide dans la première chambre depuis l'orifice (34) ;
mise sous pression du fluide contre le premier piston (28) dans la position initiale ; et
déplacement des premier et second pistons (28, 30) et de l'arbre (32) en tant qu'unité de la position initiale vers la première position sous pression.

16. Procédé selon la revendication 15, dans lequel les étapes de distribution du fluide dans la première chambre (25) depuis l'orifice (34), de mise sous pression du fluide contre le premier piston (28) dans la position initiale et de déplacement des premier et second pistons (28, 30) et de l'arbre (32) en tant qu'unité de la position initiale à la première position sous pression ont lieu avant l'étape de distribution du fluide dans les première et seconde chambres (25, 27) depuis le passage (76).
